# EUROPÄISCHE PATENTSCHRIFT

(11) **EP 2 916 985 B1**
(45) Veröffentlichungstag und Bekanntmachung des Hinweises auf die Patenterteilung: **31.01.2018**
(21) Anmeldenummer: 13776753.9
(22) Anmeldetag: 07.10.2013
(51) Int. Cl.: B23C 5/08, B23C 5/14

(54) **RINGFÖRMIGES WERKZEUG ZUR BEARBEITUNG EINES WERKSTÜCKS**
ANNULAR TOOL FOR MACHINING A WORKPIECE
OUTIL ANNULAIRE DESTINÉ À USINER UNE PIÈCE

(30) Priorität: 07.11.2012 DE 102012220246
(43) Veröffentlichungstag der Anmeldung: 16.09.2015
(73) Patentinhaber: Haertel, Meiko, 58256 Ennepetal (DE)
(72) Erfinder: Haertel, Meiko, 58256 Ennepetal (DE); Sprenger, Helmut, 58256 Ennepetal (DE)
(74) Vertreter: Richardt Patentanwälte PartG mbB
(86) Internationale Anmeldenummer: PCT/EP2013/070755
(87) Internationale Veröffentlichungsnummer: WO 2014/072134

(56) Entgegenhaltungen:
- CN-Y- 201 140 295
- DE-A1- 10 316 371
- DE-A1- 19 929 201
- DE-U1- 9 316 953
- GB-A- 2 354 728
- JP-A- 2005 334 981
- US-A- 56 033

## Beschreibung

Die Erfindung betrifft ein ringförmiges Werkzeug zur Bearbeitung eines Werkstücks gemäß dem Oberbegriff des Anspruchs 1 sowie die Verwendung eines solchen Werkzeugs, insbesondere zur Öffnung einer Schweißnaht.
Um aus Werkstücken Material abzutragen sind aus dem Stand der Technik Fräser bekannt. Solche Fräser sind in der Lage, in das Werkstück einzutauchen und Material abzutragen. Ein Nachteil solcher Fräser ist, dass diese nicht dafür geeignet sind, um mit Freihandmaschinen verwendet zu werden. Dies gilt insbesondere, wenn es sich bei dem abzutragenden Material um Material einer Schweißnaht handelt, welche abgetragen, d.h. geöffnet werden soll. Der Grund ist die extreme Härt des Materials im Bereich der Schweißnaht.
DE 93 16 953 U1 offenbart ein Schneidewerkzeug zum Fräsen von Schlitzen, bestehend aus einem um eine Achse rotierenden Trägerkörper mit umfangsseitig angebrachten, über den Trägerkörper vorstehenden Segmentelementen. Die Segmentelemente sind kreisringförmig, U-förmig oder V-förmig ausgebildet.
Die DE 103 16 371 A1 offenbart einen Profilfräser mit einem mit einer Antriebsspindel verbindbaren Grundkörper als Träger für eine Mehrzahl von Schneidplatten, die entlang des Umfangs des Grundkörpers verteilt angeordnet und an diesem mittels einer Spannschrauben und Spannflächen aufweisenden Spanneinrichtung austauschbar festgelegt sind.
Die DE 199 29 201 C2 offenbart ein Werkzeug zur spanabhebenden Bearbeitung mindestens eines Werkstücks mit einem zentrischen Haltebereich zur Befestigung an einem Antriebselement und mit einem ringförmigen Arbeitsbereich mit über den Umfang verteilten, das Werkstück bearbeitenden Zähnen, wobei die Zähne im Arbeitsbereich jeweils ballig ausgebildet sind.
WO 2011/136 275 A1 und WO 2003/ 070 409 A1 offenbaren eine kreisförmige Scheidscheibe. DE 10 2004 027 032 A1 beschreibt ein materialabtragendes Werkzeug, insbesondere Fräser zum Auftrennen von Schweissnähten, insbesondere von Laserschweissnähten an Karosserieblechen, umfassend ein Schneidrad, dadurch gekennzeichnet, dass auf zumindest einer Seite des Schneidrads zumindest eine Distanzscheibe angeordnet ist, die einen kleineren Radius als der materialabtragende Teil des Schneidrads aufweist. Ein Werkzeug mit den Merkmalen des Oberbegriffs des Anspruchs 1 ist aus der US 56,033 bekannt.

Dem gegenüber liegt der Erfindung die Aufgabe zugrunde, ein verbessertes Werkzeug zur Bearbeitung eines Werkstücks, sowie ein Verfahren zur Verwendung eines solchen Werkzeugs zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.
Es wird ein ringförmiges Werkzeug zur insbesondere spanabhebenden Bearbeitung eines Werkstücks angegeben, wobei das Werkzeug einen zu seiner Ringform zentrierten Befestigungsbereich zur Befestigung an einer rotierbaren Antriebsachse aufweist, wobei das Werkzeug ferner über den Umfang des Werkzeugs angeordnete Zähne aufweist, wobei die Zähne an der Kopfseite des Werkzeugs angeordnet sind, wobei die Zähne eine bezüglich der Ringform in axialer Richtung verlaufende Bogenform mit einem Scheitelpunkt aufweisen, wobei die Zähne spiegelsymmetrisch zur durch den Scheitelpunkt gehenden Ringfläche des Werkzeugs ausgeformt sind. Durch diese Merkmale hat das erfindungsgemäße Werkzeug den Vorteil, dass damit eine Handführung des Werkzeugs bei der eintauchenden und materialabtragenden Bearbeitung des Werkstücks möglich ist. Durch die Bogenform trifft das Werkzeug zunächst nur mit einer minimalen Kontaktfläche auf das Werkstück, wodurch die vom Werkstück auf das Werkzeug ausgeübten Kräfte klein gehalten werden.
Nach einer Ausführungsform der Erfindung erstrecken sich die Zähne zumindest teilweise von der Kopfseite über die Stirnseite des Werkzeugs. Dies könnte den Vorteil haben, dass zum einen die Kontaktfläche des Werkzeugs mit dem Werkstück kontinuierlich bis zu einem durch die Werkzeuggeometrie definierten Punkt ansteigt. Die vom Werkstück auf das Werkzeug ausgeübte Kraft steigt dabei kontinuierlich und kontrollierbar an, so dass das Werkzeug durchgängig handgeführt sein kann. Zum anderen könnten durch eine entsprechende Geometrie vorrangig die Zähne der Stirnseite des Werkzeugs dafür sorgen, dass das abgetragene Material seitlich kontinuierlich abgeführt wird. Es kann sich also kein Materialstau bilden und die durch das Werkzeug bearbeitete Oberfläche wird insgesamt glatter und gleichmäßiger ausgefräst. Dies ist insbesondere relevant, wenn durch das abgetragene Material eine Rille gebildet wird, welche später durch eine neue Schweißnaht gefüllt werden soll.

Erfindungsgemäß ist die Bogenform durch zwei konturlos tangential ineinander übergehende Kreise gegeben mit einem ersten Kreisradius und einem zweiten Kreisradius. Der Kreismittelpunkt für den ersten Kreisradius liegt unterhalb des Scheitelpunkts und der Kreismittelpunkt für den zweiten Kreisradius liegt in radialer Richtung unterhalb des Kreismittelpunkts für den ersten Kreisradius, wobei der erste Kreisradius kleiner ist als der zweite Kreisradius. Durch diese Merkmale hat das erfindungsgemäße Werkzeug den Vorteil, dass eine hochwirksame Schneidgeometrie bereitgestellt werden kann, welche die Handführung des Werkzeugs in besonders effektiver Weise möglich macht. Gerade die Verwendung der o.g. Bogenform ermöglicht es einen optimalen Kompromiss zwischen Materialabtrag, Handhabbarkeit und seitlicher Materialabfuhr bereitzustellen.
Z.B. beträgt in Radialer Richtung des Werkzeugs gesehen der Abstand zwischen den Kreismittelpunkten des ersten und des zweiten Kreisradius zwischen der 0,5 und 0,7 fachen Differenz des ersten und des zweiten Kreisradius. Dadurch ist ein besonders ruhiges Arbeiten in Folge der leichten Krümmung der Zähne möglich.
Nach einer Ausführungsform der Erfindung erstrecken sich in radialer Richtung des Werkzeugs gesehen die Zähne von der Kopfseite über die Stirnseite des Werkzeugs ausschließlich bis zum 0,5-fachen des in radialer Richtung des Werkzeugs gesehenen Abstands zwischen den Kreismittelpunkten des ersten und des zweiten Kreisradius. Dies könnte den Vorteil haben, dass es noch mit minimalem Materialaufwand bezüglich des Werkzeugs möglich ist, in handgeführter Weise den Materialabtrag vorzunehmen und das abgetragene Material seitlich abzuführen. Selbst wenn das Werkzeug tief in das Werkstück eingedrungen ist, arbeitet dennoch in erster Linie die Kopfseite des Werkzeugs zur Bewirkung des Materialabtrags. Die Stirnseite führt das Material ab und verbreitert gegebenenfalls noch die durch den Materialabtrag entstehende Furche. Durch den Verzicht auf eine weitere Erstreckung der Zähne über das 0,5-fache des in radialer Richtung des Werkzeugs gesehenen Abstands wird diese Arbeitsweise nicht beeinträchtigt. Gegenteilig wird diese unterstützt, da das Werkzeug leichter wird und damit einfacher von Hand führbar sein könnte.
Erfindungsgemäß liegt das Verhältnis des zweiten zu dem ersten Kreisradius zwischen 14 und 17. Durch die spezielle Wahl dieses Verhältnisses der Radien könnte ermöglicht werden, dass eine besonders hohe Laufruhe beim Materialabtrag gewährleistet ist. Nach dem Eindringen des Werkzeugs in das Werkstück ergibt sich dabei ein optimaler Kompromiss zwischen dem Materialabtrag an der Kopfseite des Werkzeugs, als auch an der Stirnseite des Werkzeugs. Dies könnte unter anderem dazu führen, dass die durch den Materialabtrag entstehende Wärmeentwicklung am Werkzeug gleichmäßig verteilt ist. Dies erhöht die Langlebigkeit des Werkzeugs. Nach einer Ausführungsform der Erfindung sind die Zähne an der Kopfseite des Werkzeugs in radialer Richtung gekrümmt, d.h. mit einem Drall ausgebildet sind. Dies könnte die seitliche Materialabfuhr des abgetragenen Materials unterstützen, so dass das Werkzeug ungehindert kontinuierlich Material abtragen kann. Dadurch werden keine Verunreinigungen in der durch die Materialabtragung entstandenen Rille hinterlassen, was eine anschließende Bearbeitung der Rille, z.B. eine Verschweißung oder Verfüllung, vereinfacht.
Nach einer Ausführungsform der Erfindung erstreckt sich die Krümmung von der Kopfseite über die Stirnseite. Die Krümmung ist dabei vorzugsweise von der Kopfseite über die Stirnseite konstant. Damit könnte die Effizienz der besagten Materialabfuhr auch konstant gehalten werden, unabhängig von der Eintauchtiefe des Werkzeugs in das zu bearbeitende Werkstück. Die Schnittgeschwindigkeit des Werkzeugs ist damit nahezu gleichbleibend, unabhängig von der Eintauchtiefe. Das erfindungsgemäße Werkzeug kann zum Öffnen einer Schweißnaht vorgesehen sein. Aufgrund der besonderen Materialhärte von Schweißnähten und die zum Öffnen der Schweißnaht notwendige Präzession der Werkzeugführung könnte das besagte Werkzeug in besonders guter Weise für diese Arbeit geeignet sein. Trotz der Materialhärte trägt das Werkzeug gleichmäßig aufgrund seiner Schneidgeometrie das Material ab und weist dennoch eine sehr hohe Laufruhe auf, so dass sogar eine Handführung möglich ist. Außerdem ergibt sich durch die Bogenform des Werkzeugs eine Rille im bearbeiteten Werkstück, welche anschließend wieder in einfacher Weise zugeschweißt werden kann.

Nach einer Ausführungsform der Erfindung ist das Werkzeug einstückig ausgebildet. Dadurch ist es kostengünstig herzustellen und die mechanische Haltbarkeit wird erhöht.

In einem weiteren Aspekt betrifft die Erfindung die Verwendung eines oben beschriebenen Werkzeugs für den Einsatz bei Handwerkzeugen oder bei spanabhebenden Maschinen.

Nach einer Ausführungsform der Erfindung handelt es sich bei dem Einsatz um das Öffnen einer Schweißnaht.

Im Folgenden werden bevorzugte Ausführungsformen der Erfindung anhand der Zeichnungen näher erläutert. Es zeigen:
- Fig. 1: eine perspektivische Ansicht eines Werkzeugs mit Antriebsmittel,
- Fig. 2: eine schematische Querschnittsansicht eines Werkzeugs mit Antriebsmittel,
- Fig. 3: eine perspektivische Seitenansicht eines Werkzeugs mit Antriebsmittel,
- Fig. 4: eine schematische Ansicht von Verfahrensschritten zur Bearbeitung eines Werkstücks.

Im Folgenden sind einander ähnliche Elemente mit den gleichen Bezugszeichen gekennzeichnet.

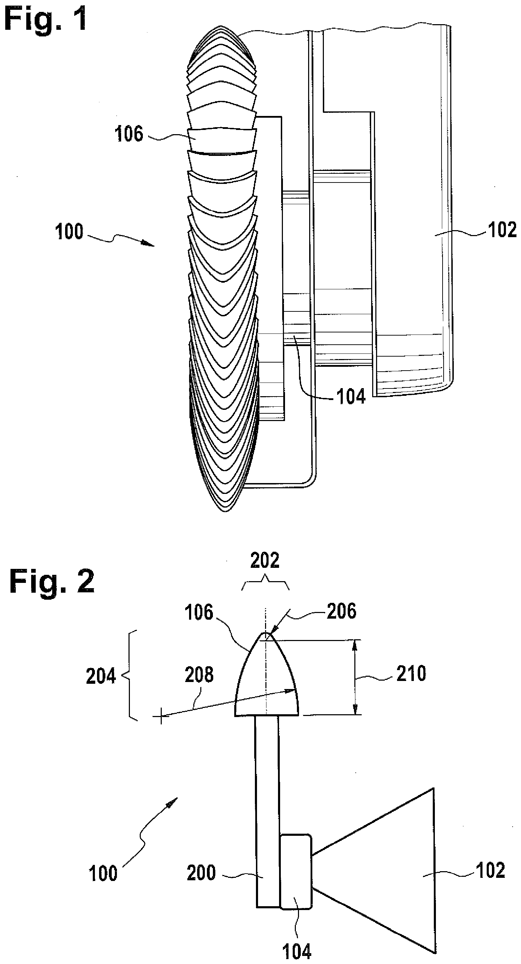

Figur 1 zeigt eine perspektivische Ansicht eines Werkzeugs 100 mit einem Antriebsmittel 102, z.B. eine von Hand führbare Winkelschleifmaschine. Das Antriebsmittel 102 treibt über eine Achse 104 das Werkzeug 100 rotatorisch an. Über Zähne 106 des Werkzeugs kann dieses einen Materialabtrag von einem Werkstück vornehmen. Das Werkzeug 100 weist eine Ringform auf, wobei über den Umfang des Werkzeugs die Zähne 106 angeordnet sind.
Figur 2 zeigt eine schematische Querschnittsansicht des Werkzeugs 100 der Figur 1, wobei nun ersichtlich ist, dass die Achse 104 an einen Befestigungsbereich 200 des Werkzeugs 100 angreift. Ferner ist in Figur 2 in der Querschnittsansicht der Schnitt durch einen einzelnen Zahn 106 ersichtlich, wobei sich der Zahn zumindest teilweise von der Kopfseite 202 über die Stirnseite 204 des Werkzeugs erstreckt. In axialer Ringrichtung (also in der Figur 2 von links nach rechts) weist der Zahn 106 eine Bogenform mit einem Scheitelpunkt auf und er ist spiegelsymmetrisch zur durch den Scheitelpunkt gehenden Ringfläche des Werkzeugs ausgeformt. Die Zähne sind dadurch beiderseits am Werkzeug ausgebildet und die Zähne auf der linken Seite haben einen Rechtsdrall und sind rechtsschneidend, während die Zähne auf der rechten, dem Antriebselement zugewandten Seite, einen Linksdrall aufweisen und linksschneidend sind.
Die Bogenform ist in der Figur 2 durch zwei Kreise beschreibbar, welche konturlos tangential ineinander übergehen. Die durch die beiden Kreise beschreibbare Bogenform ist durch zwei Kreisradien definierbar, nämlich einen ersten Radius 206 und einen zweiten Radius 208. Durch das Verhältnis von einem Faktor 15 der beiden Radien ergibt sich eine besonders hohe Laufruhe des Werkzeugs beim durchzuführenden Materialabtrag.

Wie ferner in Figur 2 dargestellt ist, erstreckt sich der Zahn 106 nur bis ungefähr zum Kreismittelpunkt des zweiten Radius 204 auf der die Stirnseite 204. In radialer Richtung des Werkzeugs 100 gesehen ist dabei der Abstand 210 zwischen den Kreismittelpunkten des ersten und des zweiten Kreisradius ungefähr die 0,6-fache Differenz des ersten und des zweiten Kreisradius.

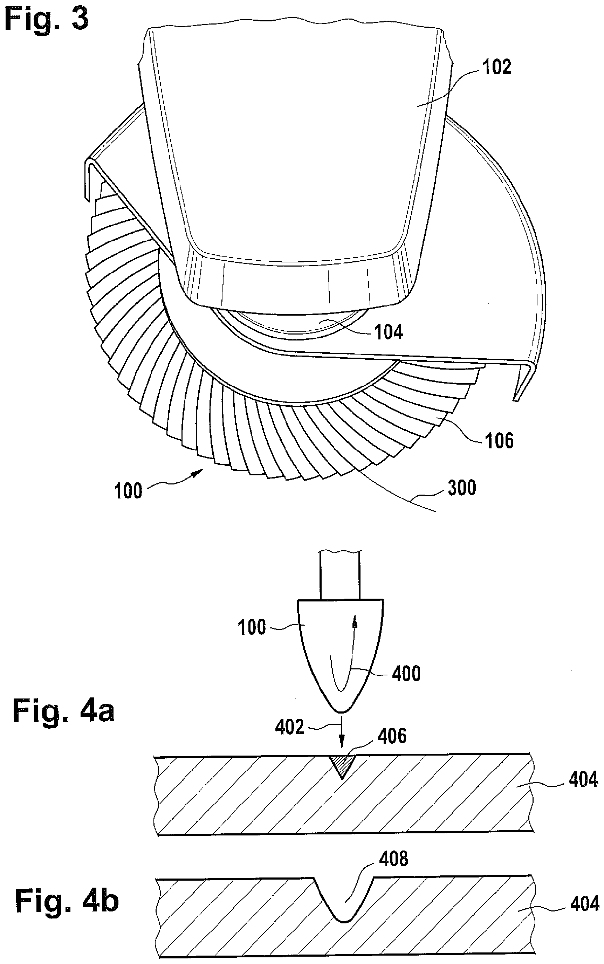

In Figur 3 ist in der perspektivischen Seitenansicht der Werkzeugs 100 ersichtlich, dass die Zähne 106 von der der Kopfseite des Werkzeugs ausgehend in radialer Richtung gekrümmt ausgebildet sind sich die Krümmung 300 von der Kopfseite über die Stirnseite erstreckt. Dies dient der effizienten Materialabfuhr (Spanabfuhr) beim schneidenden Verwenden des Werkzeugs. Dadurch erhöht sich die Laufruhe des Werkzeugs. Diese könnte weiter dadurch erhöht werden, dass entlang der Krümmung 300 die Zähne regelmäßig oder unregelmäßig unterbrochen sind.
Um zum Beispiel zur Bearbeitung von Aluminium einen optimalen Kompromiss zwischen manueller Handhabbarkeit des Werkzeugs, Laufruhe der Materialabtragungseffizienz zu haben, könnte der Spanwinkel der Zähne -20 Grad, der Freiwinkel +10 Grad und der Drall 30 Grad betragen. Vorzugsweise ist das Material der Zähne Wolframcarbid.
Die Figur 4a zeigt ein Werkstück 404 mit einer Schweißnaht 406. Zum Öffnen der Schweißnaht, d.h. der Schweißwurzel, dient nun das Werkzeug 100, welches durch einen hier nicht ersichtlichen Antrieb in eine rotatorische Bewegung in Richtung 400 versetzt wird. Das Werkzeug 100 wird in Richtung 402 auf die Schweißnaht 406 aufgesetzt und trägt nun kontinuierlich Material ab.
Das Resultat ist in Figur 4b gezeigt, wobei die entstandene Rille 408 die Zahnform des Werkzeugs 100 aufweist. Die Rille 408 kann nun erneut verschweißt werden oder anderweitig mit Material verfüllt werden.

### Bezugszeichen

- 100: Werkzeug
- 102: Antriebselement
- 104: Achse
- 106: Zahn
- 200: Befestigungsbereich
- 202: Kopfseite
- 204: Stirnseite
- 206: Erster Radius
- 208: Zweiter Radius
- 210: Abstand
- 300: Krümmung
- 400: Rotationsrichtung
- 402: Richtung
- 404: Werkstück
- 406: Schweißwurzel
- 408: Rille

## Patentansprüche

1. Ringförmiges Werkzeug (100) zur Bearbeitung eines Werkstücks, wobei das Werkzeug (100) einen zu seiner Ringform zentrierten Befestigungsbereich (200) zur Befestigung an einer rotierbaren Antriebsachse (104) aufweist, wobei das Werkzeug (100) ferner über den Umfang des Werkzeugs (100) angeordnete Zähne (106) aufweist, wobei die Zähne (106) an der Kopfseite (202) des Werkzeugs (100) angeordnet sind, wobei die Zähne (106) eine bezüglich der Ringform in axialer Richtung verlaufende Bogenform mit einem Scheitelpunkt aufweisen, wobei die Bogenform durch zwei Kreise gegeben ist mit einem ersten Kreisradius (206) und einem zweiten Kreisradius (208), wobei der Kreismittelpunkt für den ersten Kreisradius (206) unterhalb des Scheitelpunkts liegt und wobei der Kreismittelpunkt für den zweiten Kreisradius (208) in radialer Richtung unterhalb des Kreismittelpunkts für den ersten Kreisradius (206) liegt, wobei der erste Kreisradius kleiner ist als der zweite Kreisradius, **dadurch gekennzeichnet, dass** die Zähne (106) spiegelsymmetrisch zur durch den Scheitelpunkt gehenden Ringfläche des Werkzeugs (100) ausgeformt sind, wobei die zwei Kreise konturlos tangential ineinander übergehen, und wobei das Verhältnis des zweiten (208) zu dem ersten (206) Kreisradius zwischen 14 und 17 liegt.

2. Werkzeug (100) nach Anspruch 1, wobei sich die Zähne (106) zumindest teilweise von der Kopfseite (202) über die Stirnseite (204) des Werkzeugs (100) erstrecken.

3. Werkzeug (100) nach Anspruch 1, wobei in radialer Richtung des Werkzeugs (100) gesehen der Abstand (210) zwischen den Kreismittelpunkten des ersten und des zweiten Kreisradius zwischen der 0,5 und 0,7 fachen Differenz des ersten (206) und des zweiten (208) Kreisradius beträgt.

4. Werkzeug (100) nach Anspruch 1, wobei sich in radialer Richtung des Werkzeugs (100) gesehen die Zähne (106) von der Kopfseite (202) über die Stirnseite (204) des Werkzeugs (100) ausschließlich bis zum 0,5-fachen des in radialer Richtung des Werkzeugs (100) gesehenen Abstands (210) zwischen den Kreismittelpunkten des ersten und des zweiten Kreisradius erstrecken.

5. Werkzeug (100) nach einem der vorigen Ansprüche, wobei die Zähne (106) an der Kopfseite (202) des Werkzeugs (100) in radialer Richtung gekrümmt (300) ausgebildet sind.

6. Werkzeug (100) nach Anspruch 5, wobei sich die Krümmung (300) von der Kopfseite (202) über die Stirnseite (204) erstreckt.

7. Werkzeug (100) nach Anspruch 6, wobei die Krümmung (300) von der Kopfseite (202) über die Stirnseite (204) konstant ist.

8. Werkzeug (100) nach einem der vorigen Ansprüche, wobei das Werkzeug (100) einstückig ausgebildet ist.

9. Verwendung eines Werkzeugs (100) nach einem der vorigen Ansprüche für den Einsatz bei Handwerkzeugen oder bei spanabhebenden Maschinen.

10. Verwendung nach Anspruch 9, wobei es sich bei dem Einsatz um das Öffnen einer Schweißnaht (406) handelt.

## Claims

1. A ring-shaped tool (100) for processing a workpiece, wherein the tool (100) has a fastening area (200) for fastening onto a rotatable drive shaft (104), wherein the fastening area is centred in relation to the ring shape of the tool, wherein the tool (100) also has teeth (106) arranged around the circumference of the tool (100), wherein the teeth (106) are arranged on the head end (202) of the tool (100), wherein the teeth (106) have an arc shape running in the axial direction in relation to the ring shape, the arc shape having a summit, wherein the arc shape is given by two circles, the circles having a first circle radius (206) and a second circle radius (208), wherein the circle centre for the first circle radius (206) is located below the summit, and wherein the circle centre for the second circle radius (208) is located below the circle centre for the first circle radius (206) in the radial direction, wherein the first circle radius is smaller than the second circle radius, **characterised in that** the teeth (106) are formed mirror symmetrically relative to the ring surface of the tool (100) passing through the summit, wherein the two circles transition tangentially into one another in a contour-less way, wherein the ratio between the second circle radius (208) and the first circle radius (206) is between 14 and 17.

2. The tool (100) according to claim 1, wherein the teeth (106) extend at least partially from the head end (202) over the front edge (204) of the tool (100).

3. The tool (100) according to claim 1, wherein the distance (210) between the circle centres of the first circle radius and the second circle radius in the radial direction of the tool (100) is between 0.5 and 0.7 times the difference between the first circle radius (206) and the second circle radius (208).

4. The tool (100) according to claim 1, wherein the teeth (106), as considered in radial direction of the tool (100), extend from the head end (202) over the front edge (204) of the tool (100) only up to 0.5 times the distance between the circle centres of the first and the second circle radius as considered in the radial direction of the tool (100) .

5. The tool (100) according to any one of the preceding claims, wherein the teeth (106) at the head end (202) of the tool (100) are curved (300) in the radial direction.

6. The tool (100) according to claim 6, wherein the curvature (300) extends from the head end (202) over the front edge (204).

7. The tool (100) according to claim 6, wherein the curvature (300) is constant from the head end (202) over the front edge (204).

8. The tool (100) according to any one of the preceding claims, wherein the tool (100) is formed in one piece.

9. Use of a tool (100) according to any one of the preceding claims for use with hand tools or with cutting machines.

10. The use according to claim 9, wherein the use is the opening of a weld seam (406).

## Revendications

1. Outil annulaire (100) destiné à usiner une pièce, où l'outil (100) présente une région de fixation (200) centrée par rapport à sa forme annulaire pour la fixation à un axe d'entraînement (104) rotatif, où l'outil (100) présente en outre des dents (106) disposées sur le périmètre de l'outil (100), où les dents (106) sont disposées sur la face sommitale (202) de l'outil (100), où les dents (106) présentent une forme d'arc s'étendant dans la direction axiale par rapport à la forme annulaire avec un point culminant, où la forme d'arc est donnée par deux cercles avec un premier rayon de cercle (206) et un deuxième rayon de cercle (208), où le centre du cercle pour le premier rayon de cercle (206) se situe en-dessous du point culminant et où le centre du cercle pour le deuxième rayon de cercle (208) se situe dans la direction radiale en dessous du centre de cercle pour le premier rayon de cercle (206), où le premier rayon de cercle est inférieur au deuxième rayon de cercle, **caractérisé en ce que** les dents (106) sont formées de manière symétrique comme dans un miroir par rapport à la surface circulaire de l'outil (100) passant par le point culminant, où les deux cercles se superposent l'un dans l'autre de manière tangentielle sans contour, et où le rapport du deuxième rayon (208) sur le premier rayon (208) de cercles se situe entre 14 et 17.

2. Outil (100) selon la revendication 1, dans lequel les dents (106) s'étendent au moins partiellement à partir de la face sommitale (202) par-dessus la face frontale (204) de l'outil (100).

3. Outil (100) selon la revendication 1, dans lequel, vu dans la direction radiale de l'outil (100), la distance (210) entre les centres des cercles du premier et du deuxième rayon de cercle se situe entre 0,5 et 0,7 fois la différence entre les premier (206) et deuxième (208) rayons de cercles.

4. Outil (100) selon la revendication 1, dans lequel, vu dans la direction radiale de l'outil (100), les dents (106) s'étendent à partir de la face sommitale (202) par-dessus la face frontale (204) de l'outil (100) exclusivement jusqu'à 0,5 fois la distance (210) entre les centres de cercles des premier et deuxième rayons de cercles, vu dans la direction radiale de l'outil (100).

5. Outil (100) selon l'une des revendications précédentes, dans lequel les dents (106) sont conçues recourbées dans la direction axiale au niveau de la face sommitale (202) de l'outil (100).

6. Outil (100) selon la revendication 6, dans lequel la courbure (300) s'étend de la face sommitale (202) par-dessus la face frontale (204).

7. Outil (100) selon la revendication 6, dans lequel la courbure (300) est constante de la face sommitale (202) par-dessus la face frontale (204).

8. Outil (100) selon l'une des revendications précédentes, où l'outil (100) est conçu d'un seul tenant.

9. Utilisation d'un outil (100) selon l'une des revendications précédentes pour l'emploi dans des outils manuels ou des machines délivrant des copeaux.

10. Utilisation selon la revendication 9, dans laquelle il s'agit de l'ouverture d'un cordon de soudure (406) dans le cas de l'emploi.
